(19) Europäisches Patentamt
European Patent Office
Office européen des brevets

(11) **EP 4 749 807 A1**

(12) **EUROPEAN PATENT APPLICATION**
published in accordance with Art. 153(4) EPC

(43) Date of publication:
**27.05.2026 Bulletin 2026/22**

(21) Application number: **24847868.7**

(22) Date of filing: **25.06.2024**

(51) International Patent Classification (IPC):
**H01M 50/531** (2021.01)     **H01M 50/586** (2021.01)
**H01M 50/593** (2021.01)     **H01M 10/04** (2006.01)
**H01M 6/00** (2006.01)

(52) Cooperative Patent Classification (CPC):
**H01M 6/00; H01M 10/04; H01M 50/531;**
**H01M 50/586; H01M 50/593;** Y02E 60/10

(86) International application number:
**PCT/CN2024/101129**

(87) International publication number:
**WO 2025/025906 (06.02.2025 Gazette 2025/06)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.07.2023  CN 202322046195 U**

(71) Applicant: **BYD Company Limited**
**Shenzhen, Guangdong 518118 (CN)**

(72) Inventors:
• **WU, Yanzeng**
**Shenzhen, Guangdong 518118 (CN)**

• **YUAN, Wansong**
**Shenzhen, Guangdong 518118 (CN)**
• **ZHOU, Zhaohui**
**Shenzhen, Guangdong 518118 (CN)**
• **DUAN, Pingan**
**Shenzhen, Guangdong 518118 (CN)**
• **WANG, Xinyue**
**Shenzhen, Guangdong 518118 (CN)**

(74) Representative: **Taor, Simon Edward William et al**
**Venner Shipley LLP**
**TIDE Bankside**
**8 Emerson Street**
**London SE1 9DU (GB)**

(54) **SPACER ASSEMBLY AND BATTERY**

(57)     A spacer assembly and a battery are provided. The spacer assembly includes: a first side spacer, provided with a first assembly portion; and a second side spacer, disposed opposite to the first side spacer. The second side spacer is provided with a second assembly portion, the first assembly portion is detachably connected to the second assembly portion, there is a gap between the first side spacer and the second side spacer, and the gap is used to accommodate a tab of a battery. There is a spacing between the first assembly portion and each end portion of the first side spacer, and there is a spacing between the second assembly portion and each end portion of the second side spacer.

FIG. 1

## Description

This application claims priority to Chinese Patent Application No. 202322046195.0, filed with the China National Intellectual Property Administration on July 31, 2023, and entitled "SPACER ASSEMBLY AND BATTERY", which is incorporated herein by reference in its entirety.

## TECHNICAL FIELD

This application relates to the field of battery manufacturing technologies, and specifically, to a spacer assembly and a battery.

## BACKGROUND

Currently, in the battery manufacturing and assembly field, to facilitate assembly of a battery tab and prevent the tab from scattering or being squeezed due to vibration during use of a battery, two side spacers are usually disposed to clamp the tab, ensuring an operating status of the tab, and avoiding a short circuit risk due to contact between a positive electrode and a negative electrode.

However, for a battery, for example, a blade battery, with a long length, as a length of the side spacer increases, a clamping force of the side spacer on the tab reduces, making it difficult to fully clamp and fasten the tab, and failing to ensure the operating status of the tab.

## SUMMARY

An objective of this application is to provide a spacer assembly and a battery to resolve a technical problem of being difficult to ensure clamping effect of a side spacer on a tab in a conventional technology.

To achieve the objective of this application, this application provides the following technical solutions.

According to a first aspect, this application provides a spacer assembly, including: a first side spacer, provided with a first assembly portion; and a second side spacer, disposed opposite to the first side spacer. The second side spacer is provided with a second assembly portion, the first assembly portion is detachably connected to the second assembly portion, there is a gap between the first side spacer and the second side spacer, and the gap is used to accommodate a tab of a battery. There is a spacing between the first assembly portion and each end portion of the first side spacer, and there is a spacing between the second assembly portion and each end portion of the second side spacer.

The spacing is provided between the first assembly portion and each end portion of the first side spacer, and the spacing is provided between the second assembly portion and each end portion of the second side spacer, so that the first assembly portion and the second assembly portion are close to an intermediate area between the first side spacer and the second side spacer. This helps strengthen connection strength of the intermediate area between the first side spacer and the second side spacer, reduce a possibility that the intermediate area deforms and deformation of the intermediate area, and ensure clamping strength of the intermediate area between the first side spacer and the second side spacer on the tab, so that the tab is securely constrained in the gap, avoiding a short circuit due to squeezing of an electrode core.

In a possible implementation, there are a plurality of first assembly portions and a plurality of second assembly portions. The plurality of first assembly portions are spaced apart on the first side spacer, and the plurality of second assembly portions are spaced apart on the second side spacer. A maximum distance between two adjacent first assembly portions is a first distance A1, a maximum distance between two adjacent second assembly portions is a second distance A2, and a length of the tab in a length direction of the first side spacer is a tab length L, which satisfy:

$$L < A1 < R;$$

and

$$L < A2 < R$$

R is a preset length, and the preset length R satisfies: $100\text{mm} \leq R \leq 150\text{mm}$.

The first distance A1 and the second distance A2 are set to be greater than the tab length L, to ensure that positions of the first assembly portion 11 and the second assembly portion do not interfere with a position of the tab, which helps the intermediate area between the first side spacer and the second side spacer accommodate the tab.

In a possible implementation, a minimum distance between the first assembly portion and the end portion of the first side spacer is a third distance A3, and a minimum distance between the second assembly portion and the end portion of the second side spacer is a fourth distance A4, and the third distance A3 and the fourth distance A4 satisfy:

$$\frac{1}{4} \leq \frac{A3}{A1} < \frac{1}{2};$$

and

$$\frac{1}{4} \leq \frac{A4}{A2} < \frac{1}{2}$$

The third distance A3 and the fourth distance A4 are set to satisfy the foregoing relational expressions, which helps ensure connection strength of two end region areas and intermediate areas of the first side spacer

and the second side spacer, so that the first side spacer and the second side spacer are reliably connected, and can further securely clamp and fasten the tab of the battery.

In a possible implementation, the following formulas are satisfied:

$$A3 \geq \frac{1}{2}L$$

; and

$$A4 \geq \frac{1}{2}L$$

There are at least three first assembly portions and at least three second assembly portions.

In this embodiment, when both the third distance A3 and the fourth distance A4 are greater than half of the tab length, at least three first assembly portions 11 and at least three second assembly portions 21 are disposed, which helps strengthen connection strength of the first side spacer 1 and the second side spacer 2, so that the tab 100 of the battery is securely clamped and fastened in length directions of the first side spacer 1 and the second side spacer 2.

In a possible implementation, there are an even number of first assembly portions and an even number of second assembly portions. The plurality of first assembly portions are spaced apart in the length direction of the first side spacer, and are symmetric about a perpendicular bisector of the first side spacer. The plurality of second assembly portions are spaced apart in a length direction of the second side spacer, and are symmetric about a perpendicular bisector of the second side spacer.

In this embodiment, the first assembly portions are symmetrically disposed and the second assembly portions are symmetrically disposed, so that connection of the first side spacer and the second side spacer in the length direction is symmetric and uniform, thereby improving connection reliability of the first side spacer and the second side spacer.

In a possible implementation, the spacer assembly further includes a top spacer. The top spacer is located on a same side of the first side spacer and the second side spacer, the top spacer is provided with a third assembly portion, and the third assembly portion is detachably connected to the first side spacer and/or the second side spacer.

The top spacer is disposed, so that the tab can be effectively constrained in space formed by the top spacer, the first side spacer, and the second side spacer, to avoid the short circuit due to squeezing of the electrode core by the tab. The third assembly portion of the top spacer is disposed to detachably connect to the first side spacer and the second side spacer, so that the spacer assembly forms a split structure, thereby facilitating assembly and disassembly, and improving assembly efficiency and maintenance efficiency of the spacer assembly.

In a possible implementation, the first side spacer further includes a fourth assembly portion. The fourth assembly portion is located between an outermost first assembly portion on the first side spacer and an end portion on a same side of the first side spacer. The second side spacer further includes a fifth assembly portion. The fifth assembly portion is located between an outermost second assembly portion on the second side spacer and an end portion on a same side of the second side spacer. The third assembly portion is detachably connected to the fourth assembly portion and/or the fifth assembly portion.

The fourth assembly portion is disposed to be located between the outermost first assembly portion on the first side spacer and the end portion on the same side of the first side spacer, and the fifth assembly portion is disposed to be located between the outermost second assembly portion on the second side spacer and the end portion on the same side of the second side spacer, so that it can be avoided that positions of the top spacer, a joint between the first side spacer and the second side spacer, and the tab interfere with each other, thereby making a structure of the spacer assembly more reasonable and reliable.

In a possible implementation, the fourth assembly portion includes a snap-fit. The snap-fit protrudes outward relative to a surface that is of the top spacer and that is close to the first side spacer and the second side spacer.

In a possible implementation, one of the first assembly portion and the second assembly portion includes an outwardly protruding connection column, the other of the first assembly portion and the second assembly portion includes a connection groove, and the connection column is detachably inserted into the connection groove.

Structures of the first assembly portion and the second assembly portion are simple and facilitate connection, so that effect of clamping and fastening the tab can be further ensured while a detachable connection is implemented.

In a possible implementation, a clamping member is convexly disposed on an end portion of the first side spacer and the second side spacer in a length direction, and the clamping member is configured to connect to a side plate of the battery.

A spacing is provided between the first assembly portion and each end portion of the first side spacer, and a spacing is provided between the second assembly portion and each end portion of the second side spacer, so that the connection strength of the first side spacer and the second side spacer is improved, and after being cooperatively connected to the side plate, the first side spacer and the second side spacer are not likely to be pulled by the side plate and deform, thereby avoiding

5 **EP 4 749 807 A1** 6

affecting strength of clamping and fastening the tab.

In a possible implementation, the side plate is connected to two end faces of the first side spacer and the second side spacer in the length direction, and the side plate is configured to fasten an electrode core. The side plate is provided with a clamping hole whose shape adapts to that of the clamping member, and the clamping member is inserted into the clamping hole.

According to a second aspect, this application provides a battery, including the spacer assembly provided in any embodiment of the first aspect.

In the spacer assembly and the battery provided in this application, the first assembly portion is disposed to detachably connect to the second assembly portion, which helps assemble or disassemble the first side spacer and the second side spacer, and improves the assembly efficiency of the spacer assembly. The spacing is provided between the first assembly portion and each end portion of the first side spacer, and the spacing is provided between the second assembly portion and each end portion of the second side spacer, so that the first assembly portion and the second assembly portion are close to the intermediate area between the first side spacer and the second side spacer, thereby improving connection strength between the first assembly portion and the second assembly portion, and preventing the intermediate area from deforming when the lengths of the first side spacer and the second side spacer are long and from affecting the effect of clamping and fastening the tab.

**BRIEF DESCRIPTION OF DRAWINGS**

To describe technical solutions in implementations of this application or a conventional technology more clearly, the following briefly describes accompanying drawings for describing the implementations of this application or the conventional technology. It is clear that the accompanying drawings in the following descriptions show merely some implementations of this application, and a person of ordinary skill in the art may derive other drawings from these accompanying drawings without creative efforts.

FIG. 1 is a schematic exploded view of a spacer assembly according to an embodiment;

FIG. 2 is a sectional view in an A-A direction in FIG. 1;

FIG. 3 is a diagram of a structure of a first side spacer according to an embodiment;

FIG. 4 is an enlarged view at a position B in FIG. 3;

FIG. 5 is an enlarged view at a position C in FIG. 3;

FIG. 6 is a diagram of a first distance A1 and a third distance A3 of a first side spacer according to an embodiment;

FIG. 7 is a diagram of partial assembly of a battery according to an embodiment;

FIG. 8 is a three-dimensional sectional view in a D-D direction in FIG. 7; and

FIG. 9 is an enlarged view at a position E observed in a length direction of a spacer assembly in FIG. 8.

Descriptions of reference numerals:
1: first side spacer; 11: first assembly portion; 111: connection column; 112: connection groove; 12: fourth assembly portion; 13: clamping member; 2: second side spacer; 21: second assembly portion; 22: fifth assembly portion; 3: top spacer; 31: third assembly portion; 311: snap-fit; 100: tab; 200: side plate; 300: spacer assembly; 400: battery.

**DESCRIPTION OF EMBODIMENTS**

The following clearly and completely describes technical solutions in implementations of this application with reference to accompanying drawings in the implementations of this application. It is clear that the described implementations are merely a part rather than all of implementations in this application. All other implementations obtained by a person of ordinary skill in the art based on the implementations of this application without creative efforts shall fall within the protection scope of this application.

It should be noted that, when a component is referred to as "fastened to" another component, the component may be directly on the another component, or a component may exist between them. When a component is considered to be "connected to" another component, the component may be directly connected to the another component, or a component may exist between them.

In this application, unless otherwise specified and limited, the terms "mounted", "interconnected", "connected", "fastened", and the like should be understood in a broad sense. For example, such terms may indicate a fastened connection, a detachable connection, or an integrated connection, may indicate a mechanical connection, an electrical connection, or mutual communication, or may indicate a direct connection, an indirect connection through an intermediate medium, internal communication between two elements, or an interaction relationship between two elements, unless otherwise specified. A person of ordinary skill in the art may understand specific meanings of the foregoing terms in this application based on specific situations.

Unless otherwise defined, all technical and scientific terms used in this application have same meanings as those usually understood by a person skilled in the art of this application. Terms used in the specification

4

of this application are merely for the purpose of describing specific embodiments, but are not intended to limit this application. The term "and/or" used in this application includes any and all combinations of one or more related listed items.

In descriptions of embodiments of this application, it should be noted that orientation or position relationships indicated by the terms "center", "above", "below", "left", "right", and the like are orientation or position relationships based on the accompanying drawings, and are only intended to facilitate and simplify the descriptions of this application, but are not intended to indicate or imply that an indicated apparatus or element needs to have a specific orientation and be constructed and operated in a specific orientation, and therefore shall not be understood as a limitation on this application.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include at least one of the features. In the descriptions of this application, "a plurality of" means at least two, for example, two or three, unless otherwise specifically specified.

The following describes some implementations of this application in detail with reference to the accompanying drawings. The following embodiments and features in embodiments may be combined with each other when there is no conflict.

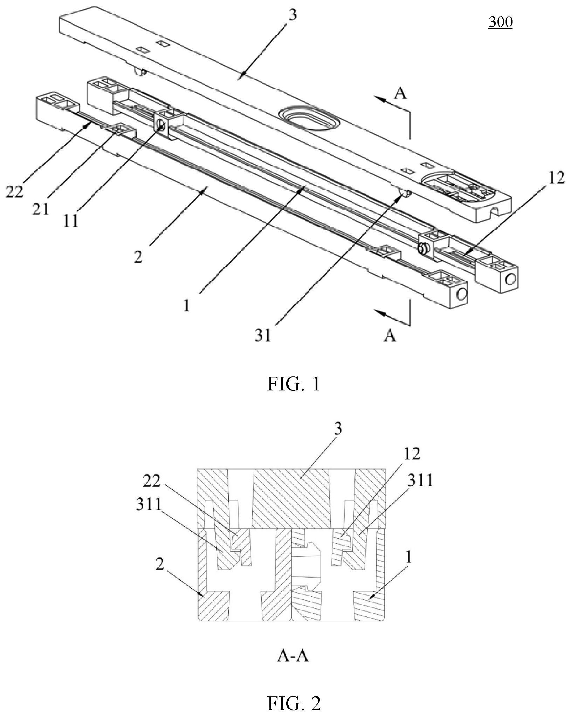

As shown in FIG. 1 to FIG. 9, the spacer assembly 300 provided in an embodiment of this application includes a first side spacer 1 and a second side spacer 2, and the first side spacer 1 and the second side spacer 2 are disposed opposite to each other. A shape and a size of the first side spacer 1 are the same as those of the second side spacer 2, to adapt and connect to each other. For example, as shown in FIG. 1, both the first side spacer 1 and the second side spacer 2 are in a long strip shape and have a same length. The spacer assembly 300 is disposed in a housing of a battery 400, and is located between an electrode core and a cover plate, and space for accommodating a tab 100 of the battery is defined between the electrode core and the cover plate. For example, the spacer assembly 300 is applicable to a blade battery.

The first side spacer 1 is provided with a first assembly portion 11, the second side spacer 2 is provided with a second assembly portion 21. The first assembly portion 11 is detachably connected to the second assembly portion 21, there is a gap between the first side spacer 1 and the second side spacer 2, and the gap is used to accommodate the tab 100 of the battery. There is a spacing between the first assembly portion 11 and each end portion of the first side spacer 1, and there is a spacing between the second assembly portion 21 and each end portion of the second side spacer 2.

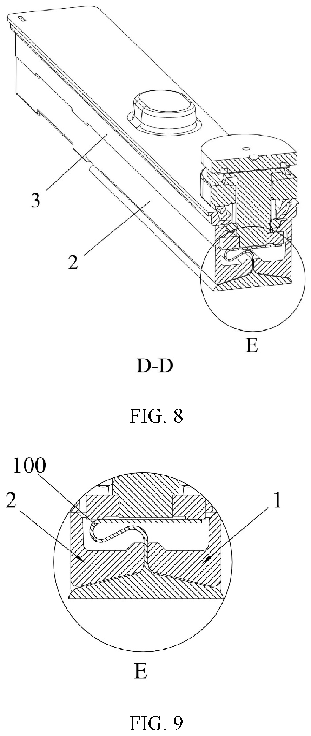

The first side spacer 1 is detachably connected to the second side spacer 2 through the first assembly portion 11 and the second assembly portion 21, which facilitates disassembly and assembly, and helps improve assembly efficiency and maintenance efficiency of the spacer assembly 300. There is the gap in an intermediate area between the first side spacer 1 and the second side spacer 2, and the bent tab 100 passes through the gap, and is clamped and fastened by the first side spacer 1 and the second side spacer 2. As shown in FIG. 8 or FIG. 9, the tab 100 is constrained in the gap between the first side spacer 1 and the second side spacer 2, so that the tab 100 does not squeeze the electrode core located below the first side spacer 1 and the second side spacer 2, avoiding a short circuit due to contact between a positive electrode and a negative electrode.

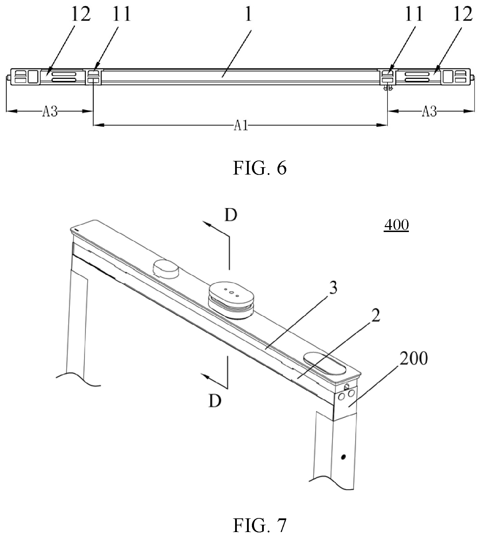

Batteries of different models may have different lengths. For some batteries with short lengths, the first assembly portion 11 and the second assembly portion 21 are disposed on end portions of the first side spacer 1 and the second side spacer 2, so that it can be ensured that the intermediate area between the first side spacer 1 and the second side spacer 2 can effectively clamp the tab 100 while the first side spacer 1 is reliably connected to the second side spacer 2. However, for a battery with a long length, lengths of the first side spacer 1 and the second side spacer 2 are also long. If the first assembly portion 11 and the second assembly portion 21 are disposed on the end portions of the first side spacer 1 and the second side spacer 2, the intermediate area between the first side spacer 1 and the second side spacer 2 is very likely to deform with absence of a connection element, and it is difficult to ensure clamping strength on the tab 100, causing the tab 100 to squeeze the electrode core and resulting in the short circuit. It may be understood that the foregoing "length" direction is a left-right direction in FIG. 6.

In the spacer assembly 300 provided in this embodiment, the spacing is provided between the first assembly portion 11 and each end portion of the first side spacer 1, and the spacing is provided between the second assembly portion 21 and each end portion of the second side spacer 2, so that the first assembly portion 11 and the second assembly portion 21 are close to the intermediate area between the first side spacer 1 and the second side spacer 2. This helps strengthen connection strength of the intermediate area between the first side spacer 1 and the second side spacer 2, reduce a possibility that the intermediate area deforms and deformation of the intermediate area, and ensure the clamping strength of the intermediate area between the first side spacer 1 and the second side spacer 2 on the tab 100, so that the tab 100 is securely constrained in the gap, avoiding the short circuit due to squeezing of the electrode core.

In the spacer assembly 300 provided in this application, the first assembly portion 11 is disposed to detachably connect to the second assembly portion 21, which helps assemble or disassemble the first side spacer 1 and the second side spacer 2, and improves assembly efficiency of the spacer assembly 300. The spacing is provided between the first assembly portion 11 and each end portion of the first side spacer 1, and the spacing is provided between the second assembly portion 21 and each end portion of the second side spacer 2, so that the first assembly portion 11 and the second assembly portion 21 are close to the intermediate area between the first side spacer 1 and the second side spacer 2, thereby improving connection strength between the first assembly portion 11 and the second assembly portion 21, and preventing the intermediate area from deforming when the lengths of the first side spacer 1 and the second side spacer 2 are long and from affecting effect of clamping and fastening the tab 100.

In a specific embodiment, there are a plurality of first assembly portions 11 and a plurality of second assembly portions 21. The plurality of first assembly portions 11 are spaced apart on the first side spacer 1, and the plurality of second assembly portions 21 are spaced apart on the second side spacer 2. A maximum distance between two adjacent first assembly portions 11 is a first distance A1, a maximum distance between two adjacent second assembly portions 21 is a second distance A2, and a length of the tab 100 in a length direction of the first side spacer 1 is a tab length L, and the first distance A1, the second distance A2, and the tab length L satisfy:

$$L < A1 < R;$$

and

$$L < A2 < R$$

R is a preset length, and the preset length R satisfies: 100 mm≤R≤150 mm.

The tab 100 is located between two first assembly portions 11 with a maximum spacing distance, and is located between two second assembly portions 21 with a maximum spacing distance. For example, the tab 100 is located between two first assembly portions 11 closest to an intermediate area of the first side spacer 1, and is located between two second assembly portions 21 closest to an intermediate area of the second side spacer 2. The first distance A1 and the second distance A2 are set to be greater than the tab length L, to ensure that positions of the first assembly portion 11 and the second assembly portion 21 do not interfere with a position of the tab 100, which helps the intermediate area between the first side spacer 1 and the second side spacer 2 accommodate the tab 100.

The preset length R is a preset length parameter. When the first distance A1 and the second distance A2 are less than the preset length R, the clamping strength of the intermediate area between the first side spacer 1 and the second side spacer 2 on the tab 100 can be effectively ensured, to prevent the tab 100 from scattering or being squeezed in the gap.

Further, a minimum distance between the first assembly portion 11 and the end portion of the first side spacer 1 is a third distance A3, and a minimum distance between the second assembly portion 21 and the end portion of the second side spacer 2 is a fourth distance A4, and the third distance A3 and the fourth distance A4 satisfy:

$$\frac{1}{4} \leq \frac{A3}{A1} < \frac{1}{2};$$

and

$$\frac{1}{4} \leq \frac{A4}{A2} < \frac{1}{2}$$

For example, as shown in FIG. 6, there are two first assembly portions 11 and two second assembly portions 21. Third distances A3 between the two first assembly portions 11 and end portions of the first side spacer 1 that are on same sides as the two first assembly portions 11 may be the same or may be different, and both the third distances A3 corresponding to the two first assembly portions 11 satisfy the foregoing relational expression. Similarly, fourth distances A4 between the two second assembly portions 21 and end portions of the second side spacer 2 that are on same sides as the two second assembly portions 21 may be the same or may be different, and both the fourth distances A4 corresponding to the two second assembly portions 21 satisfy the foregoing relational expression.

The third distance A3 and the fourth distance A4 are set to satisfy the foregoing relational expressions, which helps ensure connection strength of two end region areas and intermediate areas of the first side spacer 1 and the second side spacer 2, so that the first side spacer 1 and the second side spacer 2 are reliably connected, and can further securely clamp and fasten the tab 100 of the battery.

In another optional embodiment, the following formulas are satisfied:

$$A3 \geq \frac{1}{2} L;$$

and

$$A4 \geq \frac{1}{2} L$$

There are at least three first assembly portions 11 and at least three second assembly portions 21.

In this embodiment, when both the third distance A3 and the fourth distance A4 are greater than half of the length of the tab 100, at least three first assembly portions 11 and at least three second assembly portions 21 are disposed, which helps strengthen the connection strength of the first side spacer 1 and the second side spacer 2, so that the tab 100 of the battery is securely clamped and fastened in length directions of the first side spacer 1 and the second side spacer 2. Optionally, when both the third distance A3 and the fourth distance A4 are greater than half of the length of the tab 100, a top spacer 3 may be further added, or the first assembly portion 11 and the second assembly portion 21 are disposed on the end portions of the first side spacer 1 and the second side spacer 2, to improve connection strength in the length directions of the first side spacer 1 and the second side spacer 2.

Based on any one of the foregoing embodiments, there are an even number of first assembly portions 11 and an even number of second assembly portions 21. For example, there may be four or six first assembly portions 11 and four or six second assembly portions 21. The plurality of first assembly portions 11 are spaced apart in the length direction of the first side spacer 1, and are symmetric about a perpendicular bisector of the first side spacer 1. The plurality of second assembly portions 21 are spaced apart in the length direction of the second side spacer 2, and are symmetric about a perpendicular bisector of the second side spacer 2. It may be understood that perpendicular bisectors of the first side spacer 1 and the second side spacer 2 are imaginary lines perpendicular to midpoints in the length directions of the first side spacer 1 and the second side spacer 2. Positions of the plurality of first assembly portions 11 are mirror-symmetric about the perpendicular bisector of the first side spacer 1, and positions of the plurality of second assembly portions 21 are mirror-symmetric about the perpendicular bisector of the second side spacer 2.

In this embodiment, the first assembly portions 11 are symmetrically disposed and the second assembly portions 21 are symmetrically disposed, so that connection of the first side spacer 1 and the second side spacer 2 in the length direction is symmetric and uniform, thereby improving connection reliability of the first side spacer 1 and the second side spacer 2.

The spacer assembly 300 further includes the top spacer 3. The top spacer 3 is located on a same side of the first side spacer 1 and the second side spacer 2, the top spacer 3 is provided with a third assembly portion 31, and the third assembly portion 31 is detachably connected to the first side spacer 1 and/or the second side spacer 2. The top spacer 3 is in a long strip shape, and a length of the top spacer 3 adapts to the lengths of the first side spacer 1 and the second side spacer 2. Specifically, the top spacer 3 is located on a side that is of the first side spacer 1 and the second side spacer 2 and that is away from the electrode core. For example, as shown in FIG. 1, the top spacer 3 is located above the first side spacer 1 and the second side spacer 2.

The top spacer 3 is disposed, so that the tab 100 can be effectively constrained in space formed by the top spacer 3, the first side spacer 1, and the second side spacer 2, to avoid the short circuit due to squeezing of the electrode core by the tab 100. The third assembly portion 31 of the top spacer 3 is disposed to detachably connect to the first side spacer 1 and/or the second side spacer 2, so that the spacer assembly 300 forms a split structure, thereby facilitating assembly and disassembly, and improving the assembly efficiency and the maintenance efficiency of the spacer assembly 300.

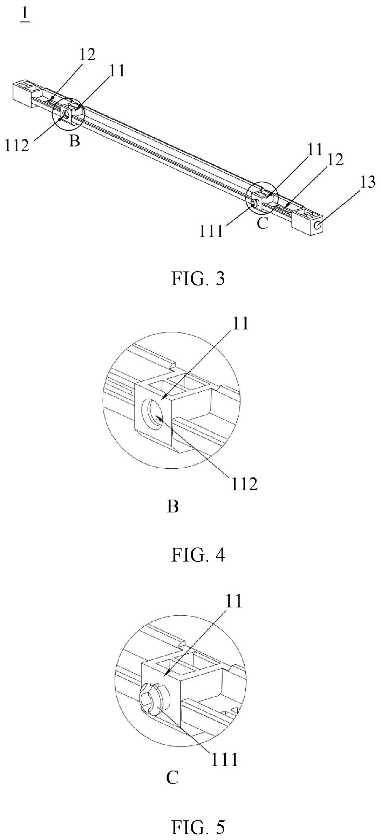

Further, as shown in FIG. 3, the first side spacer 1 further includes a fourth assembly portion 12. The fourth assembly portion 12 is located between an outermost first assembly portion 11 on the first side spacer 1 and an end portion on a same side of the first side spacer 1. The second side spacer 2 further includes a fifth assembly portion 22. The fifth assembly portion 22 is located between an outermost second assembly portion 21 on the second side spacer 2 and an end portion on a same side of the second side spacer 2. The third assembly portion 31 is detachably connected to the fourth assembly portion 12 and/or the fifth assembly portion 22.

The fourth assembly portion 12 is disposed to be located between the outermost first assembly portion 11 on the first side spacer 1 and the end portion on the same side of the first side spacer 1, and the fifth assembly portion 22 is disposed to be located between the outermost second assembly portion 21 on the second side spacer 2 and the end portion on the same side of the second side spacer 2, so that it can be avoided that positions of the top spacer 3, a joint between the first side spacer 1 and the second side spacer 2, and the tab 100 interfere with each other, thereby making a structure of the spacer assembly 300 more reasonable and reliable.

Optionally, as shown in FIG. 2, the fourth assembly portion 12 includes a snap-fit 311 that protrudes outward relative to a surface that is of the top spacer 3 and that is close to the first side spacer 1 and the second side spacer 2. A hook-shaped stop member configured to abut against the fourth assembly portion 12 or the fifth assembly portion 22 is disposed on an end portion of the snap-fit 311, to limit relative movement between the top spacer 3 and the side spacer.

In a specific embodiment, as shown in FIG. 3 to FIG. 5, one of the first assembly portion 11 and the second assembly portion 21 includes an outwardly protruding connection column 111, the other of the first assembly portion 11 and the second assembly portion 21 includes a connection groove 112, and the connection column 111 is detachably inserted into the connection groove 112. The connection column 111 is cooperatively clamped to the connection groove 112, so that the first assembly portion 11 is detachably connected to the second assembly portion 21. A cross section of the connection column 111 in a height direction of the first assembly portion 11 may be of a semicircular shape, a circular shape, a square shape, or the like. The connection groove 112 may be a hole or a groove with a shape that adapts to that of the connection column 111. For example, the connection groove 112 may be a semicircular hole, a circular hole, a square hole, or the like.

It should be noted that, when there are a plurality of first assembly portions 11 and a plurality of second assembly portions 21, structures of the plurality of first assembly portions 11 or the plurality of second assembly portions 21 may be the same. For example, the plurality of first assembly portions 11 may each include a connection column 111, and the plurality of second assembly portions 21 may each include a connection groove 112. Alternatively, the structures of the plurality of first assembly portions 11 or the plurality of second assembly portions 21 may be different. For example, a part of the first assembly portions 11 include a connection column 111, and the other part of the first assembly portions 11 include a connection groove 112. The plurality of second assembly portions 21 are adaptively connected to corresponding first assembly portions 11, a part of the second assembly portions 21 include a connection groove 112, and the other part of the second assembly portions 21 include a connection column 111.

In this embodiment, structures of the first assembly portion 11 and the second assembly portion 21 are simple and facilitate connection, so that the effect of clamping and fastening the tab 100 can be further ensured while a detachable connection is implemented.

A clamping member 13 is convexly disposed on an end portion of the first side spacer 1 and the second side spacer 2 in the length direction, and the clamping member 13 is configured to connect to a side plate 200 of the battery. Specifically, as shown in FIG. 7, the side plate 200 is connected to two end faces of the first side spacer 1 and the second side spacer 2 in the length direction, and the side plate 200 is configured to fasten the electrode core. The side plate 200 is provided with a clamping hole whose shape adapts to that of the clamping member 13, and the clamping member 13 is inserted into the clamping hole. The clamping member 13 may be detachably connected to the clamping hole, or may be fastened to the clamping hole. There may be one or more clamping members 13 on the end faces of the first side spacer 1 and the second side spacer 2. This is not specifically limited in this application. In the spacer assembly 300 provided in this application, a spacing is provided between the first assembly portion 11 and each end portion of the first side spacer 1, and a spacing is provided between the second assembly portion 21 and each end portion of the second side spacer 2, so that the connection strength of the first side spacer 1 and the second side spacer 2 is improved, and after being cooperatively connected to the side plate 200, the first side spacer 1 and the second side spacer 2 are not likely to be pulled by the side plate 200 and deform, thereby avoiding affecting strength of clamping and fastening the tab.

This application further provides a battery 400, which includes the spacer assembly 300 provided in any one of the foregoing embodiments.

In the descriptions of this specification, descriptions of reference terms such as "an embodiment", "a specific embodiment", "an example", or "a specific example" mean that specific features, structures, materials or characteristics described with reference to the embodiment or example are included in at least one embodiment or example of this application. In this specification, example expressions of the foregoing terms do not necessarily refer to a same embodiment or example. In addition, the described specific features, structures, materials, or characteristics may be combined in a proper manner in any one or more embodiments or examples. Moreover, a person skilled in the art may combine and associate different embodiments or examples and features of different embodiments or examples described in this specification when there is no mutual contradiction.

The foregoing discloses only an exemplary embodiment in this application, which is certainly not intended to limit the protection scope of this application. A person of ordinary skill in the art may understand that implementation of all or a part of procedures in the foregoing embodiments and equivalent variations made in accordance with the claims of this application shall fall within the scope of this application.

## Claims

1. A spacer assembly (300), comprising:

   a first side spacer (1), provided with a first assembly portion (11); and
   a second side spacer (2), disposed opposite to the first side spacer (1), wherein the second side spacer (2) is provided with a second assembly portion (21), the first assembly portion (11) is detachably connected to the second assembly portion (21), there is a gap between the first side spacer (1) and the second side spacer (2), and the gap is used to accommodate a tab (100) of a battery (400), wherein
   there is a spacing between the first assembly portion (11) and each end portion of the first side spacer (1), and there is a spacing between the second assembly portion (21) and each end portion of the second side spacer (2).

2. The spacer assembly (300) according to claim 1, wherein there are a plurality of first assembly portions (11) and a plurality of second assembly portions (21), the plurality of first assembly portions (11) are spaced apart on the first side spacer (1), the plurality of second assembly portions (21) are spaced apart on the second side spacer (2), a maximum distance between two adjacent first assembly portions (11) is a first distance A1, a maximum distance between two adjacent second assembly portions (21) is a second distance A2, and a length of the tab (100) in a length direction of the first side spacer (1) is a tab length L, and the first distance A1, the second distance A2, and the tab length L satisfy:

$$L<A1<R;$$

and

$$L<A2<R,$$

wherein
R is a preset length, and the preset length R satisfies: 100 mm≤R≤150 mm.

3. The spacer assembly (300) according to claim 2, wherein a minimum distance between the first assembly portion (11) and the end portion of the first side spacer (1) is a third distance A3, and a minimum distance between the second assembly portion (21) and the end portion of the second side spacer (2) is a fourth distance A4, and the third distance A3 and the fourth distance A4 satisfy:

$$\frac{1}{4}\leq\frac{A3}{A1}<\frac{1}{2};$$

and

$$\frac{1}{4}\leq\frac{A4}{A2}<\frac{1}{2}$$

4. The spacer assembly (300) according to claim 3, satisfying:

$$A3 \geq \frac{1}{2}L;$$

and

$$A4 \geq \frac{1}{2}L,$$

wherein
there are at least three first assembly portions (11) and at least three second assembly portions (21).

5. The spacer assembly (300) according to any one of claims 2 to 4, wherein there are an even number of first assembly portions (11) and an even number of second assembly portions (21), and the plurality of first assembly portions (11) are spaced apart in the length direction of the first side spacer (1), and are symmetric about a perpendicular bisector of the first side spacer (1); and

the plurality of second assembly portions (21) are spaced apart in a length direction of the second side spacer (2), and are symmetric about a perpendicular bisector of the second side spacer (2).

6. The spacer assembly (300) according to any one of claims 2 to 4, wherein the spacer assembly (300) further comprises a top spacer (3), the top spacer (3) is located on a same side of the first side spacer (1) and the second side spacer (2), the top spacer (3) is provided with a third assembly portion (31), and the third assembly portion (31) is detachably connected to the first side spacer (1) and/or the second side spacer (2).

7. The spacer assembly (300) according to claim 6, wherein the first side spacer (1) further comprises a fourth assembly portion (12), the fourth assembly portion (12) is located between an outermost first assembly portion (11) on the first side spacer (1) and an end portion on a same side of the first side spacer (1);

the second side spacer (2) further comprises a fifth assembly portion (22), the fifth assembly portion (22) is located between an outermost second assembly portion (21) on the second side spacer (2) and an end portion on a same side of the second side spacer (2); and
the third assembly portion (31) is detachably connected to the fourth assembly portion (12) and/or the fifth assembly portion (22).

8. The spacer assembly (300) according to claim 7, wherein the fourth assembly portion (12) comprises a snap-fit (311), and the snap-fit (311) protrudes outward relative to a surface that is of the top spacer (3) and that is close to the first side spacer (1) and the second side spacer (2).

9. The spacer assembly (300) according to claim 1, wherein one of the first assembly portion (11) and the second assembly portion (21) comprises an outwardly protruding connection column (111), the other of the first assembly portion (11) and the second assembly portion (21) comprises a connection groove (112), and the connection column (111) is detachably inserted into the connection groove (112).

10. The spacer assembly (300) according to claim 1, wherein a clamping member (13) is convexly disposed on an end portion of the first side spacer (1) and the second side spacer (2) in a length direction, and the clamping member (13) is configured to connect to a side plate (200) of the battery (400).

11. The spacer assembly (300) according to claim 10, wherein the side plate (200) is connected to two end faces of the first side spacer (1) and the second side spacer (2) in the length direction, the side plate (200) is configured to fasten an electrode core, the side plate (200) is provided with a clamping hole whose shape adapts to that of the clamping member (13), and the clamping member (13) is inserted into the clamping hole.

12. A battery (400), comprising the spacer assembly (300) according to any one of claims 1 to 11.

FIG. 1

A-A

FIG. 2

FIG. 3

B

FIG. 4

C

FIG. 5

EP 4 749 807 A1

FIG. 6

FIG. 7

D-D

FIG. 8

FIG. 9

## INTERNATIONAL SEARCH REPORT

International application No.

**PCT/CN2024/101129**

| A. | CLASSIFICATION OF SUBJECT MATTER |
|---|---|

H01M50/531(2021.01)i;  H01M50/586(2021.01)i;  H01M50/593(2021.01)i;  H01M10/04(2006.01)i;  H01M6/00(2006.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS: CNTXT; DWPI; WPABS; ENTXT; CNKI; 万方, WANFANG; Elsevier Science: 电池, 极耳, 隔圈, 装配, 可拆卸, 间隙, 间隔, 夹持, battery, tab, spacer, assembly, removable, gap, space, clamp

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 220797020 U (BYD CO., LTD.) 16 April 2024 (2024-04-16) description, paragraphs 0058-0091, and figures 1-9 | 1-12 |
| X | CN 219180727 U (BYD CO., LTD. et al.) 13 June 2023 (2023-06-13) description, paragraphs 0039-0090, and figures 1-6 | 1, 9-12 |
| A | CN 219180727 U (BYD CO., LTD. et al.) 13 June 2023 (2023-06-13) description, paragraphs 0039-0090, and figures 1-6 | 2-8 |
| X | CN 218242155 U (BYD CO., LTD.) 06 January 2023 (2023-01-06) description, paragraphs 0034-0066, and figures 1-9 | 1, 9-12 |
| A | CN 218242155 U (BYD CO., LTD.) 06 January 2023 (2023-01-06) description, paragraphs 0034-0066, and figures 1-9 | 2-8 |
| A | CN 211350812 U (HUIZHOU BYD BATTERY CO., LTD.) 25 August 2020 (2020-08-25) entire description | 1-12 |
| A | CN 217086819 U (ZEEKR AUTOMOBILE (NINGBO HANGZHOU BAY NEW ZONE) CO., LTD. et al.) 29 July 2022 (2022-07-29) entire description | 1-12 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 September 2024** | **13 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/101129**

## C.    DOCUMENTS CONSIDERED TO BE RELEVANT

| Category* | Citation of document, with indication, where appropriate, of the relevant passages | Relevant to claim No. |
|---|---|---|
| A | JP 2022069854 A (PRIME PLANET ENERGY & SOLUTIONS, INC.) 12 May 2022 (2022-05-12) <br> entire description | 1-12 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 220797020 | U | 16 April 2024 | None | | | |
| CN | 219180727 | U | 13 June 2023 | None | | | |
| CN | 218242155 | U | 06 January 2023 | None | | | |
| CN | 211350812 | U | 25 August 2020 | None | | | |
| CN | 217086819 | U | 29 July 2022 | None | | | |
| JP | 2022069854 | A | 12 May 2022 | JP | 7333299 | B2 | 24 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202322046195